# EUROPEAN PATENT APPLICATION

(11) **EP 4 563 623 A1**
(43) Date of publication of application: **04.06.2025**
(21) Application number: 24020337.2
(22) Date of filing: 27.11.2024
(51) Int. Cl.: C08J 5/00, C08L 3/02, C08L 97/02, C08L 99/00, C08L 5/12, C08J 3/20, C08J 7/054, A01G 9/029, A01G 9/02

(54) **PRODUCTION OF BIODEGRADABLE COMPOST-BASED MANUFACTS FOR USE IN AGRICULTURE, HORTICULTURE AND FLORICULTURE**

(30) Priority: 28.11.2023 IT 202300025347
(71) Applicant: Eng4Life s.r.l., 83100 Avellino (AV) (IT)
(72) Inventor: Caccavo, Diego, 83100 Avellino (AV) (IT); Mancino, Raffaele, 83100 Avellino (AV) (IT); Lamberti, Gaetano, 83100 Avellino (AV) (IT); Barba, Anna Angela, 83100 Avellino (AV) (IT)
(74) Representative: Masetti Zannini de Concina, Alessandro

(57) **Abstract**

The invention concerns a method for the production of biodegradable manufactured articles, such as seed trays and pots for applications in agriculture, horticulture and floriculture, starting from a mixture containing plant compost, in particular the type of compost called "green composted soil improver", and a natural polysaccharide biopolymer, or a material of natural origin containing it as main component, as binders. The composition of the articles also includes inorganic and/or organic aggregates, and in particular ground and dried plant trimming and pruning residues.

The invention defines the composition of the mixture, the procedure to be followed and the technique to be used to form and stiffen the manufactured articles, as well as the use and composition of a possible protective layer for their partial waterproofing. Such manufactured articles, appropriately shaped to form seed trays and/or pots, are of particular interest in the agricultural, horticultural and nursery fields.

## Description

### Field of the invention

The present invention concerns the production of biodegradable compost-based manufactured articles for use in agriculture, horticulture and floriculture. More specifically, the invention concerns a method for the production of biodegradable products starting from a mixture containing compost and natural polysaccharide biopolymers as binders, in which the composition of the mixture and the technique to be used to shape and stiffen the products are defined. The invention also concerns the use and composition of a possible protective layer for the partial waterproofing of the products. Such products, appropriately shaped to form seed trays and/or pots, are of particular interest in the agricultural, horticultural and nursery fields.

### Background of the invention

Seed germination is often obtained in small pots or plastic seed trays (mainly of polystyrene foam), rather than in the field. During the first days of life, the seedling is left to grow inside these containers and only when it is fully developed is it transplanted into the soil. Some of the advantages of using a seed tray are listed below:
- The seed tray allows the seed to germinate in controlled conditions, which is not always possible in the field. The seed tray can in fact be placed inside a building, where the seed, or the seedling in the first days of life, is protected from the elements. Inside a building it is also possible to create the optimal conditions for the germination of the seed, controlling temperature and humidity. In addition, the seedlings are protected from insects and parasites that could undermine their growth and health.
- It is possible to save space inside the growing medium. In fact, by planting seeds directly in the ground it is possible that some will not germinate or that some seedlings will die prematurely, thus leaving part of the land uncultivated.
- Time is saved because, while some plants are growing in the field, in the meantime it is possible to start germination in the seed trays. It is thus possible to create a continuous cycle of germination, growth, transplanting and harvesting of the product.

The most commonly commercially available seed trays are made of polystyrene, polypropylene or peat. Seed trays made of plastic materials, although showing a good resistance to shock and heat, are not plantable and must be disposed of in special containers. Furthermore, any breakage of the container can release microplastics, which contaminate the germination soil and, following transplantation, the cultivation soil itself. A plantable seed tray or pot would not present any risks to the environment in the event of breakage, and would allow for savings on disposal costs, because degradation can also occur within the cultivation soil. Peat products, although showing worse mechanical characteristics than plastic product, degrade in the soil, at the same time promoting seed germination and helping the plant grow. Peat extraction, however, damages the ecosystem and is not sustainable. In fact, if damaged, peat bogs release large quantities of carbon dioxide.

Alternative products are available on the market, which use different materials. The company "Jiffy Group" (http://www.jiffypot.com) offers numerous biodegradable products suitable for field cultivation, not only peat-based, but also coconut fibre-based. These are able to transform into a small pot when put in contact with water, as described in the original US patent 3375607, published in 1968. The most recent patent of the same company, derived from the patent application WO2016/118442, published on July 28, 2016 and having title *"Durable fiber plant growth containers and related materials and methods",* uses peat fibre or other fibrous plant materials as the basic material, bound by means of a wax emulsion and, optionally, polyvinyl alcohol (PVA).

Other products on the market are the Cowpots (https://cowpots.com), completely biodegradable pots that are free from both peat and plastic. They are obtained from manure, as illustrated in the US patent 7594356 (Freund et al.) having title *"*Agricultural products developed from manure" (2005). The manure, separated from the liquid part, is worked with a binder, such as starch, wax or a mixture of rosin and aluminium sulphate; then, it is pressed into a mould and left to dry. When added, a starch-based binder can be included in the mixture in a proportion of 1 to 2% by weight of the weight of the solids in the mixture. The Cowpots are produced in different sizes and shapes, which can be used for different types of plants. Small seed trays are also available, with a maximum of six holes. The product, however, tends to break if transported while still wet, and this makes it unsuitable for large industrial settings, where it may be necessary to move the seed trays after watering.

In addition to the products mentioned above there are other products available, which are less commercially successful or still in the experimental phase.

Qiuyan Yuan et al. (Making biodegradable seedling pots from textile and paper waste - Part B: Development and evaluation of seedling pots, Int. J. Envir. Res. Pub Health, 2021, 18.14: 7609) produced and tested plant containers obtained from waste from the textile and paper industry. The seedling pots proposed by these authors contain 20% by weight of a binder consisting of corn starch. In the study, the mechanical, germination and degradation characteristics of the paper and cotton pots were compared with those of commercial products, and the results allowed the authors to define the produced pots as promising. However, the production process requires the use of chemical agents, such as sodium hydroxide and calcium bicarbonate, and needs to be further investigated.

The published international patent application WO2013/163127 A1 (Enginuity Worldwide LLC), having title *"*Moisture resistant biomass fuel compact and method of manufacturing*",* discloses a method for compacting combustible biomass, as well as for producing combustible composite material products (pellets, briquettes) from the latter.

The patent application CN102504560 B (Jiangsu Acad Agricultural Sci) having title *"*Degradable seedling culture container, and preparation method and application thereof' discloses degradable containers for agriculture, obtained from powdered biomass and salt-free modified oxidized starch glue. The process involves adding a urea-formaldehyde pre-polymer to the starch to improve its binding properties, but the presence of formaldehyde makes this product unsuitable for horticultural applications, as this component is corrosive and carcinogenic.

The patent application CN101297629 A, having title *"*Production and cultivation method of container for plant growth*"* illustrates the production of seed trays and pots starting from a mixture of plant fibres as the main constituent, as well as additives, fillers and starch, possibly pre-gelatinized, as a binder. The resulting mixture is inserted into a mould and pressed at a high temperature, so as to form the desired object, which is then spray-treated with a waterproofing agent. The document does not describe the possible pre-gelatinization or cross-linking procedure of the starch binder, nor does it specify the temperature at which the mixture is pressed.

The use of compost as a basic ingredient for the production of seed trays or pots represents an alternative that has not yet been satisfactorily developed, although it is interesting from an economic and environmental point of view. Compost, which is the result of a process of bio-oxidation and humification of organic materials by microorganisms, acts as a soil improver and as a fertilizer for plants. Compared to many of the products described above, which use peat or plant fibres to obtain pots or seed trays, compost has the advantage of deriving from organic waste products, which can thus be valorised by the agricultural or horticultural industries. In this regard, some published documents regarding pots or seed trays containing compost are reported below.

Using a mixture of compost and clay, Airseed Tech Holdings Pty Ltd produced a plant capsule as described in the US Patent Application 2022/174857 A1 of 2022. The application suggests adding pesticides to the mixture to protect the seed during germination and subsequently the plant during growth. After moulding, the capsule is protected by a biodegradable material, such as animal gelatine or plant derivatives.

Still with reference to compost as a raw material, the Japanese Patent Application JP H10191797 A (1998) *"*Seedling pot dedicated to market distribution composed of fully ripened compost molding and manufacturing therefor*"* uses a mixture consisting of 25-40% "gluten-rich wheat flour" (the protein complex typical of some cereals), 5-10% pulverized coal and the remainder of a specific compost of cattle manure and rice husk. The document uses high-gluten flour, and discloses a procedure to promote the formation of the gluten mesh, which is useful for giving structure to the piece. As in the other cases, the dough is then shaped by pressing to obtain a plant pot, and thereafter the product is air-dried. The document also discloses the possibility of treating the products by cooking/carbonizing the external wall, or by using a wood distillate or an agar coating to increase their durability. In this document, therefore, reference is made to a specific compost (from cattle manure and rice husk) and to a specific binder, namely gluten. The high ratio of flour to the rest of the mixture (25-40% w/w) takes into account the fact that gluten in the flour can reach a maximum of 15% by weight.

The Chinese patent application CN1922970 A having title *"*Method for making plant pot and bowl by composting and decomposing straw*"* discloses a method allowing to obtain plant pots from composted straw. Since the compost derived from straw is not very suitable for cultivation, being rich in carbon and poor in nitrogen, the document requires the addition of materials containing phosphorus and nitrogen. A binder such as starch, gelatin or carboxymethylcellulose is added to the mixture, in quantities of less than 1% by weight with respect to the dry matter. Then, the product is formed by hot pressing at temperatures between 70 °C and 120 °C. To obtain the final products, the described method requires high temperatures, and therefore involves high energy consumption. Furthermore, the formation of the product by hot pressing at high temperatures results in a fragile product, superficially imperfect, poorly resistant to water and unsuitable for transport.

In view of the prior art mentioned above, the need to have completely biodegradable products that can be used in particular as pots or plantable seed trays for agricultural, horticultural and/or floricultural applications is evident. Such products should allow the use of plant compost as a base material, mixed together with a binding biopolymer of natural origin and easy to find. Such products must have the necessary characteristics of mechanical resistance and biodegradability, and must be obtainable through a simple and economical production process, which does not require large energy expenditure.

### Summary of the invention

The present invention aims to develop a process for the industrial production of plantable and completely biodegradable manufactured articles, such as pots and seed trays, using plant compost as starting material, together with natural polysaccharide biopolymers (such as starch, agarose, carrageenan and pectin) as binders. The manufactured articles produced according to the invention must be free of synthetic materials, and be biodegradable and sustainable, plantable, rigid and transportable even when wet, and finally must be able to be produced in a simple manner starting from cheap raw materials.

According to the invention, it has been found that it is possible to produce solid products that meet the above-mentioned requirements and contain a quantity of plant compost from 30% to 60% by weight of the total and a quantity of binding polysaccharide biopolymer from 10% to 25%, the remainder (from 15% to 60% by weight) being made up of solids other than compost, such as dried plant trimming and pruning residues, inorganic aggregates, nitrogenous fertilizers, etc., by carrying out the production through a process comprising a specific activation phase of the starting polysaccharide biopolymer.

The compost to be used for the production of manufactured articles according to the present invention can be a plant compost of any origin, preferably free of water, and more preferably in powder form. However, the origin of the compost can have an impact on the percentage of the same to be included in the final product in relation to its use. For example, the compost commonly used as a soil improver, and in particular the compost commercially called "mixed composted soil improver" or "fertilizing mixed compost" (ACM, ammendante compostato misto), which is useful in the growth phases of plants, can instead have negative effects on germination, due to the release of ions into the soil and the consequent increase in the electrical conductivity and cation exchange capacity (CEC) of the soil. In fact, soils with high electrical conductivity slow down or totally inhibit germination.

For this reason, for the production of compost-based products according to the invention intended for use as seed trays or pots, a type of compost commonly called "green composted soil improver" or "fertilizing green compost" (ACV, ammendante compostato vegetale) is preferred. The latter is a product of entirely vegetal origin, usually very mature, having a relatively low content of nutrients, as well as low salinity.

A preliminary phase of milling and sieving the compost may be necessary to remove large objects from it, such as leaves, stones or branches.

It is possible, subsequently, to evaluate the compost pH and, if needed, proceed to an acidification phase. The acidification of the compost can be carried out by adding small quantities of phosphoric or nitric acid, or any other acid not harmful to plants and/or soil, directly to the ground and sieved compost.

In the process of the invention, a polysaccharide biopolymer is used as a binder, to allow the compost and the various additional solid components to be bound, and to give structure to the finished products. Preferably, the polysaccharide biopolymer, which must have biodegradable characteristics, can be selected between starch (which is in turn made up of a mixture of two polysaccharides: amylose and amylopectin) and agarose, in their respective purified forms, or in the non-purified forms of the corresponding natural starting materials, cereal flour or tuber starch on the one hand, and agar-agar on the other.

Among the natural materials containing starch, wheat flour contains on average 65-75% by weight of starch (the remainder being mainly constituted by proteins and humidity), and is particularly preferred, due to its easy availability and low cost, as a starting material for the production of the manufactured articles of the invention. Agar, in turn, contains on average 70% by weight of agarose, the remainder consisting of agaropectin, another polysaccharide. Preferably, the polysaccharide binder is starch, more preferably it is the unpurified starch contained in wheat flour.

The polysaccharide biopolymer, which has the function of binding the manufactured article according to the invention and giving it structure, is not added to the compost as is but is subjected, before mixing it with the compost and with the other components that will constitute the final manufactured article, to a thermal activation phase with solvent, to form a gel.

In the process according to the invention, it is essential not to mix the polysaccharide biopolymer, when not yet activated, with the compost. This operation would result in incorrect homogenization or activation of the binder, with inevitable consequences on the mechanical properties of the product. In addition, the activation of some polysaccharide polymers, such as those used in the present invention, requires reaching temperatures that expose part of the organic material characteristic of the plant compost to the risk of degradation.

If the polysaccharide biopolymer is starch, this is subjected to gelatinization by adding a solvent, for example water, mixing and heating the mixture to temperatures between 70 °C and 90 °C, preferably around 85 °C. Once gelatinization has taken place, the binding solution, still hot, is added to the solids, while continuing to mix. The same operation is performed in the case in which starch is used in the non-purified form consisting of wheat flour. If the polysaccharide biopolymer is agarose, or a powdered agar containing it in a high percentage, the activation phase of this binder involves heating a solution of purified agar or agarose to about 80 °C, with simultaneous mixing. Also in this case, it is necessary that the binding solution is added to the solids when still hot, in order to be able to bind the mixture to the compost.

In the process according to the present invention it is preferable to add a plasticizer, for example glycerine, to the polysaccharide polymer during the activation phase. In addition, if the binder is made of starch or flour, acetic acid should preferably be added for the acetylation of starch.

According to the present invention, the binding solution thus obtained, still hot, is mixed, while adjusting the thermal and stirring conditions, with the plant compost, preferably in powder form, and with inert materials. The inert materials may consist of, for example, stones, sand, earth, clay, organic aggregates such as pomace and coconut fibres and/or plant trimming and pruning residues, and have the purpose of limiting, if necessary, the percentage of compost in relation to its composition, and of conferring mechanical properties to the final product. Preferably, such aggregates may consist of dried and ground plant trimming and pruning residues.

The mixture thus obtained must be placed, manually or using fillers, into one or more moulds of the desired shape. The mould may consist of several parts, for example a male and a female. It is important that the mould allow easy detachment of the pressed product while still wet. Solutions such as the use of mirror-polished steel or moulds coated with fixed non-stick material, such as Teflon, or removable anti-tack material, such as silicone and/or oil-based release agents, may be necessary.

Once the desired shape has been created, the wet and pressed manufactured article can be extracted from the mould and stabilized. During the stabilization phase, which coincides with the removal of the solvent, the previously activated polysaccharide biopolymer stiffens and supports the structure of the product. The manufactured article is placed to dry in the air, or in special tunnels in which, thanks to forced convection by hot air jets, it undergoes a more rapid dehydration. After a certain time, which depends on the thickness and surface of the object to be made, the dried and rigid product can be removed.

The manufactured article according to the invention can be used as is or can be treated superficially with natural water-repellent substances. For this purpose, surface treatments can be used, either with other biopolymers, such as alginate, or with waxes, oils or mixtures thereof, or with aqueous emulsions of the same.

The manufactured article obtained following partial waterproofing can be used as a pot or container for seeds or plants, and in this function it can be transported following watering, with or without the aid of reusable rigid supports, without any problem of mechanical resistance. Furthermore, if transplanted, this manufactured article degrades completely within the soil, integrating with it.

### Brief description of the drawings

The specific features of the invention, as well as the advantages thereof, will be more evident with reference to the figures attached hereto, in which:
**Figure 1** shows a perspective view of the design of a product, i.e. a pot, to be made with the process of forming manufactured articles according to the present invention;
**Figure 2** shows a cross-sectional view of the same pot design taken along a diametrical plane of the pot, shown by the line E-E of Figure 1;
**Figure 3** shows a photograph of a pot-shaped container made through the process of the present invention;
**Figure 4** shows the results of some mechanical compression tests carried out on the manufactured articles made according to the process of the invention; and
**Figure 5** shows the photograph of experimental crops in soil that use the pots based on plant compost according to the present invention, compared with crops that do not use transplantable pots.

### Detailed description of the invention

The present invention specifically provides, according to a first aspect thereof, a process for the production of manufactured articles based on plant compost and polysaccharide biopolymers as binders, comprising the following operations:
a) activating a natural polysaccharide biopolymer, or a material of natural origin containing it as the main component, in powder form, by placing it in a solvent, bringing the resulting mixture to the gelatinization temperature of the relevant polysaccharide and maintaining it at said temperature, while stirring, until gelatinization has occurred; the polysaccharide biopolymer, or the natural material containing it, being in such a quantity as to represent between 10 and 25% by weight of a final dry article;
b) adding to the hot gelatinous product thus obtained, while mixing:
   i. a quantity of plant compost, previously ground, sieved and possibly acidified, such as to represent between 30 and 60% by weight of the final dry article; and
   ii. a quantity of inert solid materials, such as dried plant trimming and pruning residues, inorganic aggregates and organic aggregates, previously ground and sieved, said quantity being such as to represent between 15 and 60% by weight of the final dry article;
c) shaping the mixture thus obtained in a mould having a shape corresponding to the desired article;
d) stabilising the product obtained from the previous operation by removing the solvent.

Preferably, the solvent used in the proposed process according to the invention is water.

As already noted, the starting plant compost may contain large materials, such as stones, branches or leaves, which must be removed beforehand. The operation may be performed by sieving, with manual sieves or industrial vibrating sieves, with mesh sizes between 1 and 10 mm, preferably between 1 and 5 mm, more preferably between 2 and 4 mm.

This step may be followed by acidification of the compost powder obtained with acids that are not harmful to plants or soil, such as phosphoric acid or nitric acid, preferably in quantities between 0% and 8%, more preferably between 0% and 5%, depending on the acid and the mass of compost used. This operation may be necessary when the pH of the powder is high (above 7.5), which would make the nutritional process demanding for the plants, or when the use of antifungal agents functional at specific pH values is planned, for example potassium sorbate, which is effective at pH lower than 6.5.

Also the solids other than compost, used as inert materials, as fillers or as agents capable of conferring mechanical properties to the final article or as nutrients for the plants, must be ground and subjected to sieving beforehand. The mesh size of the sieves to be used can vary between 1 and 10 mm, preferably between 1 and 5 mm, more preferably between 2 and 4 mm. Depending on the type of solids, in fact, it is possible to prefer more or less coarse grain sizes, capable of conferring different mechanical properties to the final product.

In the preferred embodiment of the process of the present invention, where the binding polysaccharide biopolymer is starch (such as the starch contained in wheat flour), a significant amount of solvent (preferably water) will be present in the production process. The natural material containing the biopolymer to be activated by gelatinization may be formed by the following ingredients:
▪ flour between 5 and 30% by weight, preferably between 5 and 25%, even more preferably between 8 and 10%;
▪ water between 30 and 80% by weight, preferably between 35 and 60%, even more preferably between 40 and 50% by weight;
▪ possibly a plasticizer (for example glycerine) between 0 and 15% by weight, preferably between 3 and 10%, even more preferably between 4 and 8%;
▪ possibly an activating agent, such as glacial acetic acid, between 0 and 3% by weight, preferably between 0.5 and 1% by weight.

In the preparation of the polysaccharide binder, it is preferable to add acetic acid, for the acetylation of starch, and glycerine as a plasticizer. In the case of acetic acid, it is possible to use more diluted forms, up to common kitchen vinegar, re-proportioning the quantities based on the dilution used.

Plant nutrients, especially nitrogen-based fertilizers, are preferably added to the mixture to be gelatinized, or directly to the final mixture formed by the gelatinized binding polysaccharide, the plant compost and the other powdered solids. Furthermore, it is possible to add, in the mixture to be gelatinized or directly to the final mixture as above, antifungal agents, such as sulphur, or preferably food-grade preservatives such as benzoates, potassium sorbate or calcium propionate, in percentages ranging from 0 to 5% by weight, to slow down the degradation process by fungi and moulds.

According to the invention, the plant compost and the sieved solids are mixed with the solution containing the gelatinized biopolymer and are stirred to form a homogeneous mixture, thus ensuring optimal dispersion of the solids in the biopolymer. This process, depending on the biopolymer, can be carried out at room temperature or at higher temperatures. Once the mixing step is complete, the mixture can be collected manually or automatically, for example using pipes and Mohno pumps, and can be sent to the product shaping step.

In general, the plant compost-based products according to the invention can be made by subjecting the resulting mixture to shaping using the most well-known techniques that are part of the state of the art, such as, for example, extrusion, injection moulding and compression moulding. In many cases, the kneaded product, unlike the common polymers that are subjected to such shaping techniques, is dissolved in large quantities of solvent, and following shaping the product is still quite hydrated and therefore delicate. In an embodiment of the present invention, shaping occurs by pressing using a male-female mould.

The manufactured article is collected from the shaping step and stabilized by evaporation of the solvent. The stabilization of the product is due to the stiffening of the previously activated polysaccharide polymer. Activated starch, for example, rearranges its polymer chains, assuming a crystalline structure that consolidates the product. The slower the solvent removal, the more time the polymer chains will have to rearrange themselves and the better the characteristics of the final product. The stabilization phase can therefore take place, according to the present invention, by exposure to air in ambient conditions or in air under forced convection conditions at temperatures between 30 and 100 °C, preferably between 30 and 50 °C, even more preferably at about 40 °C in ventilated tunnels.

Finally, according to some preferred embodiments of the invention, the stabilized manufactured article is subjected to a surface covering operation using water-repellent agents. These agents may be other biopolymers, such as a mixture of alginate, water and glycerine, ionotropically cross-linked by divalent ions and subsequently dried, or waxes, oils and their mixtures, and/or emulsions thereof in water. The water-repellent products may be applied by immersion, spreading or spraying. Depending on the type of product, this operation may involve heating the agent, for example above the melting point of the wax used.

In one of the embodiments of the process of the invention, a mixture of oil and wax is used. Wax in the liquid phase is very viscous and has difficulty penetrating the manufactured article, and therefore it offers a good surface protection. Oil, on the other hand, penetrates more easily into the first layers of the article, but if not polymerized, it has reduced barrier properties. An oil-wax mixture offers a good compromise, allowing the wax solubilized in oil to partially penetrate into the surface fractures/cracks, better waterproofing the manufactured article. The wax/oil ratio can be changed depending on the manufactured article, preferably in ratios between 1 and 10, more preferably between 2 and 6, even more preferably between 3 and 5.

It is also possible to use only oils (as such or in emulsion in water), preferably stand-oils (polymerized oils). The latter have better barrier properties, being able to create water-repellent films in the air in a shorter time than common oils. In one of the embodiments of the present invention, a stand-oil produced by heating soybean oil at temperatures between 280 °C and 350 °C is used.

According to a second aspect thereof, the present invention provides a manufactured article based on compost and activated polysaccharide biopolymers as binders, the constituent material of which has the following composition:
10-25% by weight of polysaccharide biopolymer, or of a material of natural origin containing it as the main component, previously activated by gelatinization;
30-60% by weight of plant compost, possibly acidified, in powder form;
15-60% by weight of inert solid materials, such as dried plant trimming and pruning residues, inorganic aggregates and organic aggregates, in powder form.

Preferably, the polysaccharide biopolymer is starch, the material of natural origin is wheat flour. According to a preferred embodiment of the manufactured article of the invention, the inert solids in powder form are ground and dried plant trimming and pruning residues.

According to further preferred embodiments of the manufactured product of the invention, such product also contains one or more plant nutritional agents and/or one or more pesticides and preservatives. Furthermore, as already noted, the product can be coated with a water-repellent layer consisting of one or more materials selected from oils, waxes, natural polysaccharide biopolymers and glycerine.

### EXAMPLES

Some specific embodiments of the production process according to the invention and of the products obtainable from the same are described below by way of example but not of limitation, together with the results of the experiments carried out.

### EXAMPLE 1

### Preparation of a pot/seed tray using activated starch and low temperature stabilization

The following example describes the preparation of a pot/seed tray based on plant compost and natural polysaccharide biopolymers, represented by the starch contained in wheat flour, according to the invention. The process comprises a step of starch gelatinization, the mixing of the plant compost in powder form and the addition of the other solids to the mixture. Furthermore, the process described in this example comprises stabilization in a hot air stream of the article manufactured in the forming step, immediately after its extraction from the mould.

160 g of dried plant trimming and pruning residues, ground and sieved to an average grain size of between 2 and 4 mm, were added to 240 g of plant compost, ground and sieved to give a powder with an average grain size of between 2 and 4 mm.

At the same time, a starch-based polysaccharide binding paste was prepared using 360 g of water, 80 g of wheat flour, 24 g of glycerol, 0.96 g of glacial acetic acid and 1.5 g of sulphur, as an antifungal agent. These ingredients were mixed while hot, at a temperature of about 85 °C. After about 20 minutes, the starch gelatinized, with a significant increase in the viscosity/consistency of the mixture.

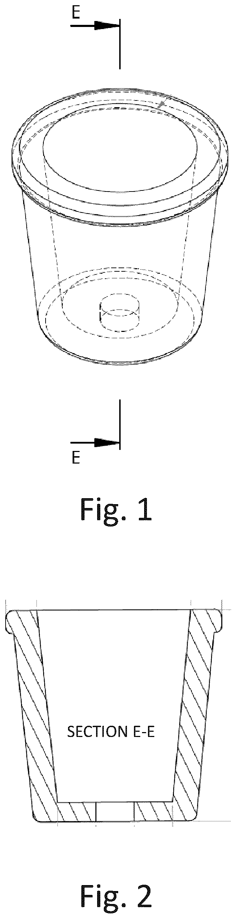

This preparation was added while still hot to the mixture of plant compost and plant pruning residues under slow and continuous stirring, until a homogeneous and sticky mixture was obtained, at room temperature. The mixture was promptly poured into an openable female mould, to facilitate the extraction of the still wet manufactures article. The mould and counter-mould configuration was such as to result in a moulded product similar to the one shown in Figures 1 and 2. Using a hydraulic press, a force of up to 2 t was applied to the male.

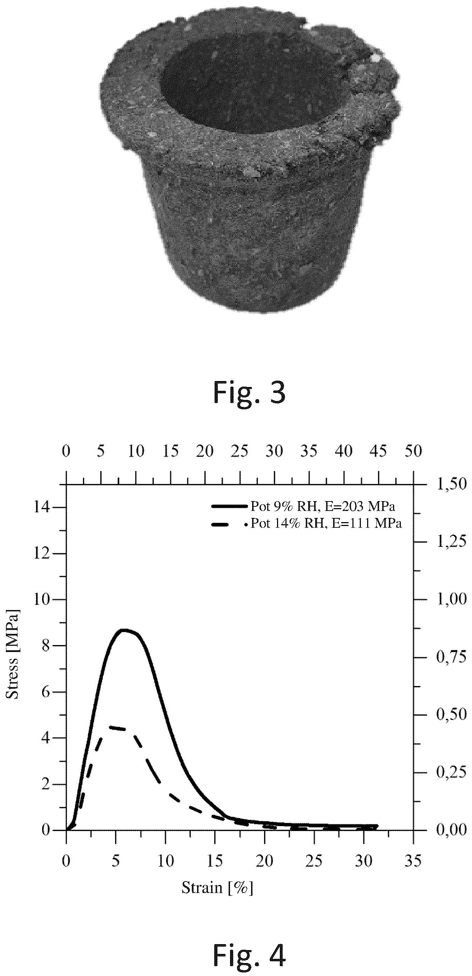

Subsequently, the male was removed and the female mould opened to collect the resulting product. This operation was repeated to obtain more pots. The products were then dried for 1 hour at 40 °C using a dryer. One of the products obtained is shown in the photograph of Figure 3. It is useful to pierce the product on the bottom and, depending on the plant, on the sides to facilitate root expansion.

The manufactured articles obtained as described above were tested both as germination pots and as transplant pots (starting from already germinated plants), showing good results in both applications.

### EXAMPLE 2

### Preparation of a pot/seed tray using activated agarose and low temperature stabilization

The following example describes the preparation of a pot/seed tray based on plant compost and natural polysaccharide biopolymers, represented by the agarose contained in a high percentage in the natural product known as agar-agar. The process comprises gelatinizing the agar, mixing the powdered plant compost and adding the other solids to the mixture. Furthermore, the process described in this example comprises stabilization in a hot air stream of the article manufactured in the forming step, immediately after its extraction from the mould.

240 g of compost of plant origin, ground and sieved as in Example 1, were added to 160 g of dried plant trimming and pruning residues, also ground and sieved as described in Example 1.

At the same time, a polysaccharide binding paste based on agar-agar was prepared, using 360 g of water, 10 g of agar-agar, 24 g of glycerol and 1.5 g of sulphur, as an antifungal agent. It is possible to supplement or replace the latter with other antifungal agents, such as potassium sorbate, benzoates or calcium propionate. These ingredients were mixed while hot, at a temperature of about 80 °C. Once the agar had completely dissolved and the mixture was gelatinized, this activated biopolymer was added to the mixture of plant compost and plant residues under slow and continuous stirring, until a homogeneous mixture was obtained.

The mixture obtained was poured into an openable female mould, and compressed with the male mould with the aid of a hydraulic press of up to 2 tons. Then, the male mould was removed and the manufactured article was collected.

The described operation was repeated to obtain more pots, and finally the pots obtained were dried for 1 hour at 40 °C using a dryer. Alternatively, it is possible to dry the pots at room temperature in a well-ventilated place, although drying times are longer in this case.

### Mechanical properties of the manufactured articles according to the invention

The manufactured articles obtained through the process of the present invention were subjected to various tests to verify their mechanical properties. Compression tests were carried out at room temperature, with a 5 mm cylindrical probe, compressing the lateral surface of the manufactured article until breaking.

Figure 4 shows the trend of the stress against the strain for the manufactured articles obtained from the process of the invention, made according to Example 1.

The article breaks at around 5% deformation. It can be noted that drier manufactured articles, with 9% relative humidity (RH), i.e. 0.09 kg of water per kg of solid, are more rigid than manufactured articles at 14% humidity. This, as can be seen from the diagram, translates into a higher Young's modulus, i.e. 203 MPa for the manufactured articles at 9% relative humidity, and a lower Young's modulus, i.e. 111 MPa for those at 14% relative humidity.

The cited values of the Young's modulus are more than adequate to ensure efficient transportation and easy handling of the manufactured articles. Furthermore, such values of the mechanical properties of the manufactured articles obtained according to the invention are also advantageous for the development of the plants, ensuring that when they are planted together with their container in the ground, the plants are able to progress their roots through the walls of the container itself.

### Field trials of compost-based pots according to the invention, stabilized at low temperature

The following is an experimentation on the pots based on plant compost according to the invention, obtained by low-temperature stabilization. Furthermore, the growth of the plants inside the manufactured article of the invention once transplanted into the soil is monitored, comparing it with the growth of the same type of plants transplanted directly into the soil.

As noted, the pot based on compost according to the invention can be used for the purpose of increasing the organic substance in the soil and providing nutrients to it, consequently promoting the plants growth. For example, a plant, at the end of its germination phase, could be inserted in a compost-based pot before transplanting into the soil, thus growing lush and healthy. At the same time, the compost-based pot would degrade in the soil without needing to be recovered at the end of the vegetative cycle of the plant.

In the experiment presented here, four curly endive plants, inside the respective compost-based pots according to the invention, said pots having been obtained by stabilizing the manufactured pot at low temperature, were planted in the soil. At the same time, four other curly endive plants were planted directly in the same soil without using pots. The transplant took place in August, and the growth of the plants was monitored day by day, observing the differences.

In the first 20 days, all the plants grew regularly, without showing any kind of problem. In the following days, the growth of the plants transplanted with the compost-based pots according to the invention was faster. 60 days after the transplant, all the curly endive plants had completed their vegetative cycle and were uprooted.

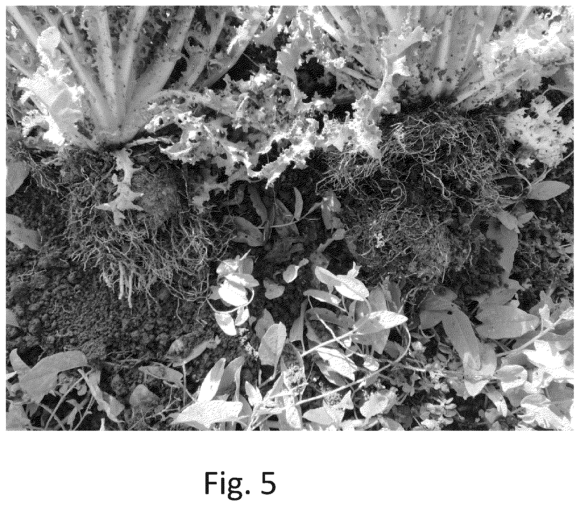

It was noted, as shown in the photograph of Figure 5, that at the end of the vegetative cycle the compost-based pots of the invention had completely degraded in the soil.

The edible part of the plants transplanted together with the pots according to the invention was more compact and voluminous than that of the plants transplanted directly into the ground. Furthermore, in the root zone of the uprooted plants, a greater root development was observed in the plants transplanted with the pots of the invention, especially in the superficial zone, compared to the plants transplanted directly into the ground, as visible in Figure 5.

### Advantages of the invention

Compared to the prior art, the present invention stands out for the following advantageous aspects:
1. The manufactured articles are biodegradable and free of substances harmful to the soil or to the plants.
2. The manufactured articles are based on plant compost, the result of a process of bio-oxidation and humification of organic materials by microorganisms. Compared to the vegetable fibres used in the prior art, compost has the advantage of being useful both as a soil improver and as a natural fertiliser for plants.
3. Plant compost can be obtained from organic waste products of agricultural, horticultural and floricultural businesses, allowing the valorisation of such waste and promoting circular economy.
4. The compost used is sieved and ground, to eliminate any unwanted objects and allowing to obtain a homogeneous mixture. This mixture is easily workable and results in manufactured articles with a homogeneous surface, free of cracks and therefore with better mechanical properties.
5. The binder is a natural polysaccharide biopolymer, activated immediately before coming into contact with the mixture of compost and inert solids, and this avoids problems of degradation of the raw materials and improves the mechanical properties of the final product. If the biopolymer were mixed in powder form before being activated or gelatinized, with the compost and/or inert solids, there would be an inaccurate homogenization or activation of the binder, with inevitable consequences on the mechanical properties of the manufactured article. The products thus obtained, in fact, are extremely fragile and unsuitable for transport, even more so after coming into contact with water.
6. The stabilization of the manufactured article with the removal of the solvent and the rearrangement of the polysaccharide chains of activated binder, can occur, after forming, at moderate temperatures in a ventilated tunnel or for longer times even at room temperature. The temperatures typically reached during hot pressing are avoided, with consequent advantages both in terms of energy and economics and in terms of product quality, which is less exposed to degradation of the organic material composing the compost.
7. The manufactured articles obtained according to the invention have a proven effectiveness both in terms of biodegradation, taking less than 60 days to be complete, and in terms of mechanical resistance. The articles are suitable for transport and for applications in the agricultural, horticultural and nursery fields.
8. The production process of the invention is simple, cheap and easily scalable at an industrial level.

## Claims

1. A process for the production of manufactured articles based on plant compost and polysaccharide biopolymers as binders, said process comprising the following operations:
a) activating a natural polysaccharide biopolymer, or a material of natural origin containing said polysaccharide as the main component, in powder form, by placing it in a solvent, heating the resulting mixture to the gelatinization temperature of the relevant polysaccharide and maintaining it at said temperature, while stirring, until gelatinization has occurred; the polysaccharide biopolymer, or the natural material containing it, being in such a quantity as to represent between 10 and 25% by weight of a final dry article;
b) adding to the hot gelatinous product thus obtained, while mixing:
i. a quantity of plant compost, previously ground, sieved and possibly acidified, such as to represent between 30 and 60% by weight of the final dry article; and
ii. a quantity of inert solid materials, such as dried plant trimming and pruning residues, inorganic aggregates and organic aggregates, previously ground and sieved, said quantity being such as to represent between 15 and 60% by weight of the final dry article;
c) shaping the mixture thus obtained in a mould having a shape corresponding to the desired product;
d) stabilising the product obtained from the previous operation by removing the solvent.

2. The process according to claim 1, wherein said solvent is water.

3. The process according to claims 1 or 2, wherein, in the operation a) of activation of the polysaccharide biopolymer or in the operation b) of mixing it with the other components, one or more nutritional agents for plants are also added to the solution or mixture, such as manures and fertilisers, and/or one more pesticides and preservatives, such as antifungal agents.

4. The process according to any one of claims 1-3, wherein said operation d) of stabilizing the product, with stiffening the polymer chains, is carried out at room temperature.

5. The process according to any one of claims 1-3, wherein said operation d) of stabilizing the product, with stiffening the polymer chains, is carried out at a temperature of 40 °C in ventilated tunnels.

6. The process according to any one of the preceding claims, wherein, after said stabilization operation d), the following further operation is carried out:
e) applying on the product a water-repellent layer prepared from oils, waxes, natural polysaccharide biopolymers, such as alginate, and/or mixtures thereof, or emulsions thereof in water.

7. The process according to any one of the preceding claims, wherein said inert solid materials, previously ground and sieved, consist, entirely of in part, of: dried plant trimming and pruning residues, inorganic aggregates, such as sand, earth, clay, and organic aggregates, such as coconut fibre, peat.

8. The process according to any one of claims 2-7, wherein said operation a) of preparation of the gelatinized polysaccharide binder is carried out starting from the following ingredients:
- wheat flour from 5 to 30% by weight, preferably from 7 to 25% by weight, even more preferably from 8 to 10% by weight;
- water from 30 to 80% by weight, preferably from 35 to 60% by weight, even more preferably from 40 to 50% by weight;
- a plasticizer (for example glycerine) from 0 to 15% by weight, preferably from 3 to 10% by weight, even more preferably from 4 to 8% by weight;
- an activating agent, such as for example glacial acetic acid, from 0 to 3% by weight, more preferably from 0.5 to 1% by weight.

9. The process according to any one of the preceding claims, wherein the plant compost and the other solid materials have been previously ground and sieved with sieves having mesh sizes between 1 and 10 mm, preferably between 1 and 5 mm, more preferably between 2 and 4 mm.

10. A manufactured article based on compost and activated polysaccharide biopolymer as binder, the constituent material of which has the following composition:
10-25% by weight of polysaccharide biopolymer or of a material of natural origin containing it as the main component, previously activated by gelatinization;
30-60% by weight of plant compost, possibly acidified, in powder form;
15-60% by weight of inert solid materials, such as dried plant trimming and pruning residues, inorganic aggregates and organic aggregates, in powder form.

11. The manufactured article based on compost and activated polysaccharide biopolymer according to claim 10, wherein said polysaccharide biopolymer is starch, said material of natural origin is wheat flour and said inert solid materials in powder form are plant trimming and pruning residues, dried and ground.

12. The manufactured article based on compost and activated polysaccharide biopolymer according to claims 10 or 11, wherein said product also contains one or more nutritional agents for plants and/or one or more pesticides and preservatives.

13. The manufactured article based on compost and activated polysaccharide biopolymer according to any one of claims 10-12, wherein the surface of said manufactured article is covered by a water-repellent layer, prepared from one or more materials selected from oils, waxes, natural polysaccharide biopolymers and glycerine.
